# EUROPÄISCHE PATENTANMELDUNG

(11) **EP 4 825 653 A1**
(43) Veröffentlichungstag der Anmeldung: **21.10.2026**
(21) Anmeldenummer: 25170956.4
(22) Anmeldetag: 16.04.2025
(51) Int. Cl.: B60N 2/02, B60N 2/06

(54) **GETRIEBEEINHEIT ZUR VERSTELLUNG EINES SITZES SOWIE VERSTELLBARE SITZEINHEIT, INSBESONDERE FÜR EIN FAHRZEUG**

(71) Anmelder: IMS Gear SE & Co. KGaA, 78166 Donaueschingen (DE)
(72) Erfinder: Kaiser, Michael, 78052 Villingen-Schwenningen (DE); Hengstler, Manuel, 78112 St. Georgen (DE); Stähle, Eric, 78073 Bad Dürrheim (DE)
(74) Vertreter: Westphal, Mussgnug & Partner Patentanwälte mbB

(57) **Zusammenfassung**

Getriebeeinheit (10) zur Verstellung, insbesondere Längsverstellung, eines Sitzes, insbesondere eines Fahrzeugsitzes, mit einem Getriebe (13), umfassend ein erstes Zahnrad (20) mit einer ersten Drehachse (22) und ein mit dem ersten Zahnrad (20) kämmendes zweites Zahnrad (24) mit einer zweiten Drehachse (26), und mit einer Gehäuseeinheit (14), wobei die Gehäuseeinheit (14) umfasst
• ein Getriebegehäuse (16), in dem das Getriebe (13) angeordnet ist, und
• mindestens ein Halteelement (18) zum Herstellen einer mechanischen Wirkverbindung der Getriebeeinheit (10) mit dem Sitz,

wobei das mindestens eine Halteelement (18) einstückig an das Getriebegehäuse (16) angeformt ist,
sowie verstellbare Sitzeinheit mit einem Sitz und einer Getriebeeinheit (10).

## Beschreibung

Die Erfindung betrifft eine Getriebeeinheit zur Verstellung eines Sitzes sowie eine verstellbare Sitzeinheit, insbesondere für ein Fahrzeug.

Zur elektromotorischen Verstellung von Sitzen in der Längsrichtung eines Kraftfahrzeugs werden häufig Sitzlängsverstellvorrichtungen eingesetzt. Die Sitzlängsverstellvorrichtungen weisen meist ein Spindelgetriebe auf, mittels dessen Drehzahl und Drehmoment zwischen einer Getriebeschnecke und einer Getriebespindel übertragen werden. Dafür ist auf der Getriebespindel eine Spindelmutter angeordnet, die ihrerseits wiederum einen Zahnkranz mit einer Außenverzahnung aufweist, der mit der Getriebeschnecke im Eingriff steht. Derartige Spindelgetriebe sind beispielsweise aus der EP 1 992 842 B1, der DE 103 62 040 B4, der DE 10 2004 046 048 B3 oder der KR 10 1 920 222 B1 bekannt.

Wie insbesondere aus den beiden Dokumenten EP 1 992 842 B1 und DE 103 62 040 B4 ersichtlich ist, können die Spindelgetriebe zum Einsatz in einer Sitzlängsverstellvorrichtung in einem U-förmigen Getriebehalter angeordnet werden. Dabei wird das Getriebegehäuse des Spindelgetriebes häufig mittels elastischer Lagerschalen in dem Getriebehalter gehalten. Der Getriebehalter kann wiederum mit dem zu verstellenden Sitz gekoppelt sein. Um im Falle eines sogenannten Crashfalls, also eines Aufpralls, insbesondere eines Frontalaufpralls des Fahrzeugs, die erforderliche Rückhaltekraft auf den Sitz ausüben zu können, müssen das Spindelgetriebe und der Getriebehalter insgesamt eine ausreichend hohe Festigkeit aufweisen.

Bekannte Lösungen für Sitzlängsverstellvorrichtungen weisen eine verhältnismäßig hohe Teileanzahl auf. Da Sitzlängsverstellvorrichtungen meist in sehr großen Stückzahlen hergestellt werden, sind derartige Systeme mit entsprechend hohen Aufwänden insbesondere in der Montage aber auch im Handling und der zugehörigen Logistik verbunden.

Der Erfindung liegt die Aufgabe zugrunde, eine Anordnung zur Verstellung eines Sitzes bereitzustellen, die geringe Herstellkosten sowie eine hohe Montagesicherheit aufweist und dabei über eine ausreichend hohe Festigkeit verfügt.

Die Aufgabe wird erfindungsgemäß gelöst durch eine Getriebeeinheit mit den Merkmalen des Patentanspruchs 1 sowie eine verstellbare Sitzeinheit mit den Merkmalen des Patentanspruchs 15.

Vorteilhafte Ausgestaltungen und Weiterbildungen der Erfindung sind in den abhängigen Ansprüchen angegeben.

Eine erfindungsgemäße Getriebeeinheit zur Verstellung, insbesondere Längsverstellung, eines Sitzes, insbesondere eines Fahrzeugsitzes, umfasst ein Getriebe, das ein erstes Zahnrad mit einer ersten Drehachse und ein mit dem ersten Zahnrad kämmendes zweites Zahnrad mit einer zweiten Drehachse aufweist. Die Getriebeeinheit umfasst ferner eine Gehäuseeinheit, wobei die Gehäuseeinheit ein Getriebegehäuse, in dem das Getriebe angeordnet ist, und mindestens ein Halteelement zum Herstellen einer mechanischen Wirkverbindung der Getriebeeinheit mit dem Sitz aufweist. Das mindestens eine Halteelement ist einstückig an das Getriebegehäuse angeformt. Damit kann die Teileanzahl reduziert und eine hohe Festigkeit der Getriebeeinheit erreicht werden.

Vorzugsweise ist die gesamte Gehäuseeinheit einstückig ausgebildet. Die Gehäuseeinheit kann insbesondere mittels eines umformenden Fertigungsverfahrens, wie beispielsweise Tiefziehen oder Fließpressen, gefertigt sein. Zum Herstellen einer mechanischen Wirkverbindung der Getriebeeinheit mit dem Sitz kann das mindestens eine Halteelement eine Befestigungsbohrung aufweisen.

Das Getriebe ist vorzugsweise als Schneckengetriebe ausgebildet, wobei bevorzugt das erste Zahnrad als Schnecke und das zweite Zahnrad als Schneckenrad ausgebildet sind. Die erste Drehachse und die zweite Drehachse sind vorzugsweise rechtwinklig zueinander angeordnet. Das zweite Zahnrad ist vorzugsweise als Spindelmutter mit einer Spindelachse ausgebildet. Dazu kann das zweite Zahnrad ein innenliegendes, um die Spindelachse angeordnetes Spindelgewinde aufweisen. Vorzugsweise ist die Spindelachse mit der zweiten Drehachse zusammenfallend ausgebildet. Das Getriebe kann so mittels einer mit dem Schneckenrad im Eingriff stehenden, vorzugsweise auf der Spindelachse angeordneten, Gewindespindel angetrieben werden.

Das mindestens eine Halteelement kann entlang der ersten Drehachse und/oder der zweiten Drehachse ausgerichtet sein. Vorzugsweise ist das mindestens eine Halteelement entlang der ersten Drehachse ausgerichtet.

Besonders bevorzugt weist die Gehäuseeinheit zwei Halteelemente des mindestens einen Halteelements auf, die an dem Getriebegehäuse einander gegenüberliegend angeformt sind. Damit kann mit Blick auf die beiden einander entgegengesetzten Bewegungsrichtung des Sitzes eine vorteilhafte Abstützung der Getriebeeinheit an dem Sitz erreicht werden. Vorzugsweise sind die beiden Halteelemente derart an dem Getriebegehäuse angeordnet, dass die Gehäuseeinheit eine T-Form mit einem vertikalen Abschnitt und zwei horizontalen Abschnitten aufweist. Dabei sind vorzugsweise der vertikale Abschnitt durch das Getriebegehäuse und die horizontalen Abschnitte jeweils durch eines der Halteelemente gebildet.

Das Getriebegehäuse kann eine entlang einer Öffnungsachse ausgebildete Öffnung aufweisen, in der das Getriebe angeordnet ist, wobei die Öffnungsachse vorzugsweise senkrecht zu der ersten Drehachse und/oder der zweiten Drehachse angeordnet ist. Die Öffnung kann dabei insbesondere vorteilhaft zur einfachen Montage des Getriebes in das Getriebegehäuse quer zu der ersten Drehachse und/oder der zweiten Drehachse sein.

Vorzugsweise ist die Öffnung als Durchgangsöffnung ausgebildet. Eine derartige Ausbildung der Öffnung kann insbesondere mit Blick auf die Fertigung der Gehäuseeinheit aber auch hinsichtlich der Montage der Getriebeeinheit vorteilhaft sein.

In einer Weiterbildung der Erfindung weist die Getriebeeinheit einen Deckeleinsatz mit einem die Öffnung verschließenden Deckel auf, wobei der Deckeleinsatz mindestens ein erstes Lagerelement aufweist, mittels dessen das erste Zahnrad gelagert ist. Das erste Zahnrad ist dabei vorzugsweise gleitgelagert. Vorzugsweise weist der Deckeleinsatz zwei erste Lagerelemente des mindestens einen ersten Lagerelements auf. Das erste Zahnrad weist vorzugsweise zwei auf der ersten Drehachse einander gegenüberliegend angeordnete erste Lagerfortsätze auf, wobei jeder ersten Lagerfortsätze an einem der ersten Lagerelemente angeordnet sein kann. Das mindestens eine erste Lagerelement kann insbesondere als Teil eines geteilten Lagersitzes und damit als Teillagersitz ausgebildet sein. Vorzugsweise ist der Lagersitz dabei in Umfangsrichtung um die erste Drehachse geteilt.

Der Deckeleinsatz kann mindestens eine Stützstruktur aufweisen, die einerseits an dem mindestens einen ersten Lagerelement und andererseits an dem Deckel angeordnet ist. So kann mittels des mindestens einen ersten Lagerelements das erste Zahnrad auch dann gelagert werden, wenn es beabstandet zu dem Deckel angeordnet ist. Dies kann insbesondere dann der Fall sein, wenn das zweite Zahnrad zwischen dem Deckel und dem ersten Zahnrad angeordnet ist. Der Deckeleinsatz kann zwei Stützstrukturen der mindestens einen Stützstruktur aufweisen, insbesondere dann wenn der Deckeleinsatz zwei erste Lagerelemente aufweist.

Das Getriebegehäuse kann mindestens eine Lagernut aufweisen, in der das erste Zahnrad gelagert ist. Vorzugsweise weist die mindestens eine Lagernut ein Nutende auf. Das Nutende kann als Teillagersitz ausgebildet sein. Das Nutende kann zusammen mit dem mindestens einen ersten Lagerelement mindestens einen Lagersitz des ersten Zahnrads bilden. Die mindestens eine Lagernut erstreckt sich vorzugsweise von einem dem horizontalen Abschnitt des Getriebegehäuses gegenüberliegend angeordneten freien Ende des vertikalen Abschnitts in Richtung des horizontalen Abschnitts. Das Getriebegehäuse kann zwei Lagernuten der mindestens einen Lagernut aufweisen, wobei vorzugsweise in jeder der Lagernuten einer der ersten Lagerfortsätze angeordnet ist.

Die mindestens eine Stützstruktur ist vorzugsweise in der mindestens einen Lagernut angeordnet. Dadurch kann die Position des mindestens einen ersten Lagerelements stabilisiert werden. Besonders bevorzugt ist die mindestens eine Stützstruktur die mindestens eine Lagernut verschließend angeordnet.

In einer bevorzugten Ausführungsform der Erfindung weist der Deckeleinsatz mindestens ein zweites Lagerelement auf, wobei das zweite Zahnrad mittels des mindestens einen zweiten Lagerelements gelagert ist. Das zweite Zahnrad ist dabei vorzugsweise gleitgelagert. Vorzugsweise weist der Deckeleinsatz zwei zweite Lagerelemente des mindestens einen zweiten Lagerelements auf. Das zweite Zahnrad weist vorzugsweise zwei auf der zweiten Drehachse einander gegenüberliegend angeordnete zweite Lagerfortsätze auf, wobei jeder zweiten Lagerfortsätze an einem der zweiten Lagerelemente angeordnet sein kann. Das mindestens eine zweite Lagerelement kann insbesondere als Teil eines geteilten Lagersitzes und damit als Teillagersitz ausgebildet sein. Vorzugsweise ist der Lagersitz dabei in Umfangsrichtung um die zweite Drehachse geteilt.

Vorzugsweise ist der Deckeleinsatz einstückig ausgebildet. Damit können das mindestens eine erste Lagerelement und das mindestens eine zweite Lagerelement zusammen mit dem Deckel in einem Montageschritt in das Getriebegehäuse montiert werden. Der Deckeleinsatz ist in dem Getriebegehäuse vorzugsweise formschlüssig befestigbar, beispielsweise mit einer Stift-, Niet- oder Schraubverbindung. Außerdem ist eine Befestigung des Deckeleinsatzes in dem Getriebegehäuse mittels einer Klebe- oder Schweißverbindung denkbar. Vorzugsweise sind die mindestens eine Stützstruktur mit dem mindestens einen ersten Lagerelement sowie das mindestens eine zweite Lagerelement einstückig an dem Deckel angeformt. Besonders bevorzugt ist der Deckeleinsatz als Kunststoffspritzgussteil ausgebildet.

In einer Weiterbildung der Erfindung weist die Getriebeeinheit mindestens ein drittes Lagerelement auf, wobei das zweite Zahnrad mittels des mindestens einen dritten Lagerelements gelagert ist, wobei das Getriebegehäuse mindestens eine Spindelöffnung zur Durchführung der Gewindespindel aufweist, und wobei das mindestens eine dritte Lagerelement in die mindestens eine Spindelöffnung einsetzbar ist. Das mindestens eine dritte Lagerelement kann eine Lagerelementöffnung zur Durchführung der Gewindespindel aufweisen. Das mindestens eine dritte Lagerelement kann insbesondere als Teil eines geteilten Lagersitzes und damit als Teillagersitz ausgebildet sein. Das mindestens eine dritte Lagerelement kann zusammen mit dem mindestens einen zweiten Lagerelement mindestens einen Lagersitz des zweiten Zahnrads bilden. Vorzugsweise weist die Getriebeeinheit zwei dritte Lagerelemente des mindestens einen dritten Lagerelements auf.

Die Getriebeeinheit kann eine Lagerbuchse aufweisen, wobei das erste Zahnrad einseitig mittels der Lagerbuchse gelagert ist. Dadurch kann die Lage des ersten Zahnrads entlang der ersten Drehachse definiert werden. Weist das erste Zahnrad zwei unterschiedlich ausgebildete erste Lagerfortsätze auf, können diese Unterschiede mittels der Lagerbuchse ausgeglichen werden, um das erste Zahnrad mit beiden ersten Lagerfortsätzen in identisch ausgebildeten Lagernuten lagern zu können. Dazu kann die Lagerbuchse auf einem der ersten Lagerfortsätze angeordnet sein.

In einer Weiterbildung der Erfindung weist das Getriebegehäuse einen ersten Gehäuseabschnitt auf, in dem das erste Zahnrad angeordnet ist, und einen zweiten Gehäuseabschnitt, in dem das zweite Zahnrad angeordnet ist, wobei die Öffnung in Richtung der ersten Drehachse in dem ersten Gehäuseabschnitt eine erste Öffnungsbreite und in dem zweiten Gehäuseabschnitt eine zweite Öffnungsbreite aufweist, und wobei die erste Öffnungsbreite kleiner ausgebildet ist als die zweite Öffnungsbreite. So kann das erste Zahnrad bei der Montage durch Einführen der ersten Lagerfortsätze bzw. der Lagerbuchse in die mindestens eine Lagernut auf einfache Weise positioniert werden.

Zur Montage der Getriebeeinheit können die folgenden Schritte, vorzugsweise in der genannten Reihenfolge, durchgeführt werden:
- Bereitstellen der Gehäuseeinheit,
- Anordnen des ersten Zahnrads in dem Getriebegehäuse, vorzugsweise in der mindestens einen Lagernut,
- Anordnen des zweiten Zahnrads in dem mindestens einen zweiten Lagerelement des Deckeleinsatzes,
- Anordnen des Deckeleinsatzes und des zweiten Zahnrads in dem Getriebegehäuse derart, dass das erste Zahnrad mittels des mindestens einen ersten Lagerelements gelagert wird.

Nach dem Anordnen des ersten Zahnrads in dem Getriebegehäuse und vor dem Anordnen des Deckeleinsatzes und des zweiten Zahnrads in dem Getriebegehäuse wird vorzugsweise das mindestens eine dritte Lagerelement in die mindestens eine Spindelöffnung eingesetzt. Vor dem Anordnen des ersten Zahnrads in dem Getriebegehäuse kann die Lagerbuchse einseitig an dem ersten Zahnrad, insbesondere auf einem der ersten Lagerfortsätze, angeordnet werden. Vorzugsweise werden der Deckeleinsatz und das zweite Zahnrad derart in dem Getriebegehäuse angeordnet, dass das zweite Zahnrad mittels des mindestens einen zweiten Lagerelements und mittels des mindestens einen dritten Lagerelements gelagert wird.

Eine erfindungsgemäße verstellbare Sitzeinheit, insbesondere für ein Fahrzeug, umfasst einen Sitz und eine vorstehend beschriebene Getriebeeinheit, wobei das mindestens eine Halteelement der Getriebeeinheit an einer Sitzschiene des Sitzes befestigt ist. Die Sitzeinheit kann ferner eine Gewindespindel umfassen, die mit dem als Spindelmutter ausgebildeten zweiten Zahnrad in Eingriff steht. Vorzugsweise weist die Sitzeinheit zwei Getriebeeinheiten, zwei Sitzschienen und zwei Gewindespindeln auf, die jeweils entsprechend ausgebildet bzw. angeordnet sind. Die Sitzeinheit ist vorzugsweise zur Längsverstellung des Sitzes ausgebildet.

Ein Ausführungsbeispiel der Erfindung wird anhand der nachfolgenden Figuren erläutert. Es zeigt:
- Figur 1: eine schematische Darstellung eines Ausführungsbeispiels einer Getriebeeinheit auf einer Gewindespindel,
- Figur 2: eine schematische perspektivische Ansicht des in Fig. 1 dargestellten Ausführungsbeispiels,
- Figur 3: eine schematische Explosionsansicht des in Fig. 1 dargestellten Ausführungsbeispiels,
- Figur 4: eine schematische perspektivische Ansicht der Gehäuseeinheit des in Fig. 1 dargestellten Ausführungsbeispiels,
- Figur 5: eine schematische Schnittansicht des in Fig. 1 dargestellten Ausführungsbeispiels entlang der zweiten Drehachse,
- Figur 6: eine schematische Schnittansicht des in Fig. 1 dargestellten Ausführungsbeispiels entlang der ersten Drehachse.

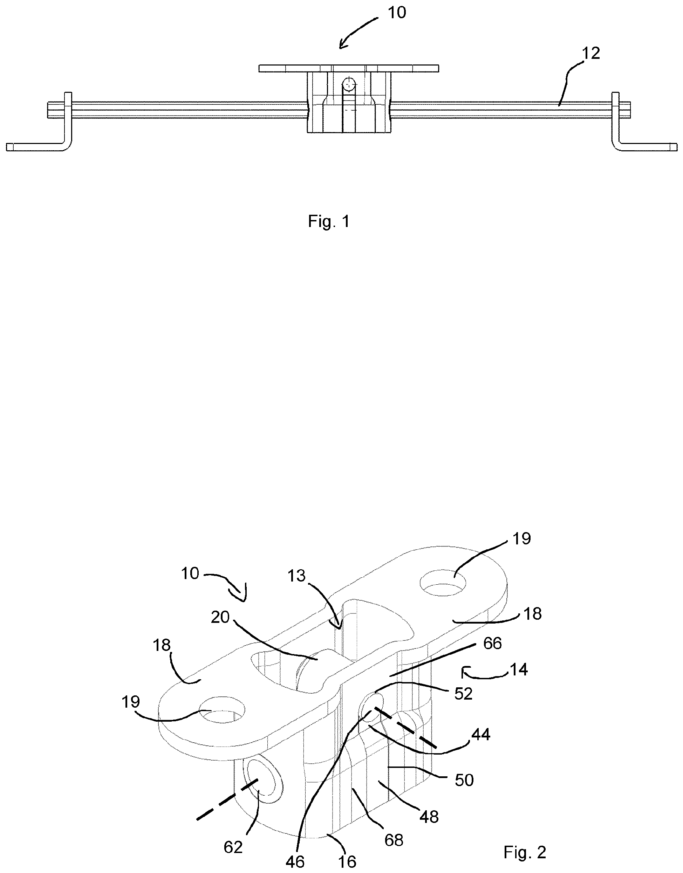

Die Figuren 1 bis 6 zeigen verschiedene Ansichten eines Ausführungsbeispiels. Der Übersichtlichkeit halber werden nicht alle Bezugszeichen in jeder Figur verwendet. Für gleiche und funktionsgleiche Teile werden die gleichen Bezugszeichen verwendet.

Fig. 1 zeigt ein Ausführungsbeispiel einer Getriebeeinheit 10 zur Verstellung, insbesondere Längsverstellung, eines Sitzes, insbesondere eines Fahrzeugsitzes, wobei die Getriebeeinheit 10 als Teil einer verstellbaren Sitzeinheit bestimmungsgemäß auf einer Gewindespindel 12 angeordnet ist. Die Sitzeinheit weist vorzugsweise zwei der in Fig. 1 gezeigten Anordnungen auf.

In Fig. 2 ist die Getriebeeinheit 10 separat dargestellt. Die Getriebeeinheit 10 umfasst ein Getriebe 13 und eine Gehäuseeinheit 14, wobei die Gehäuseeinheit 14 ein Getriebegehäuse 16, in dem das Getriebe 13 angeordnet ist, und zwei Halteelemente 18 zum Herstellen einer mechanischen Wirkverbindung der Getriebeeinheit 10 mit dem Sitz aufweist. Die Halteelemente 18 sind jeweils einstückig an das Getriebegehäuse 16 angeformt.

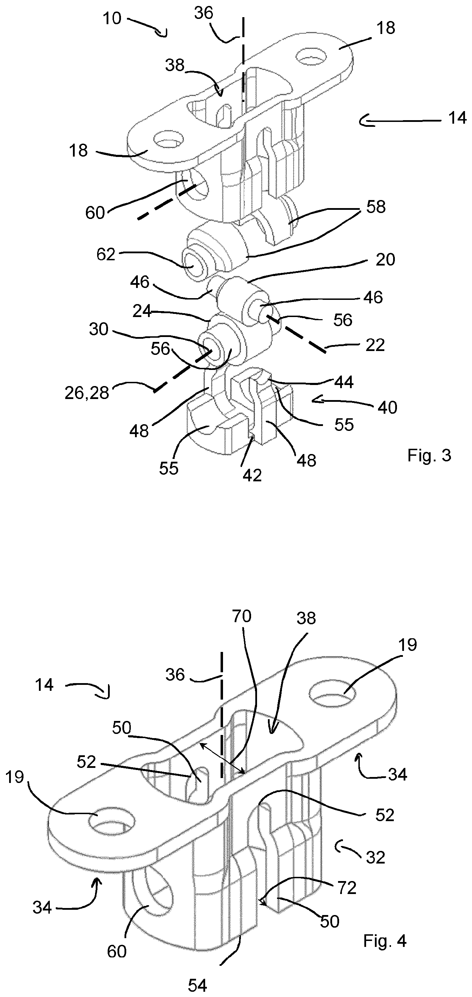

Insgesamt ist die Gehäuseeinheit 14 des gezeigten Ausführungsbeispiels einstückig ausgebildet. Eine separate Darstellung der Gehäuseeinheit 14 findet sich in Fig. 4. Die Gehäuseeinheit 14 kann insbesondere mittels eines umformenden Fertigungsverfahrens, wie beispielsweise Tiefziehen oder Fließpressen, gefertigt sein. Zum Herstellen einer mechanischen Wirkverbindung der Getriebeeinheit 10 mit dem Sitz weist jedes der Halteelemente jeweils eine Befestigungsbohrung 19 auf.

Wie die in Fig. 3 dargestellte Explosionsansicht zeigt, weist das Getriebe 13 ein erstes Zahnrad 20 mit einer ersten Drehachse 22 und ein mit dem ersten Zahnrad 20 kämmendes zweites Zahnrad 24 mit einer zweiten Drehachse 26 auf. Das Getriebe 13 ist als Schneckengetriebe ausgebildet, wobei bevorzugt das erste Zahnrad 20 als Schnecke und das zweite Zahnrad 24 als Schneckenrad ausgebildet ist. Die erste Drehachse 22 und die zweite Drehachse 26 sind rechtwinklig zueinander angeordnet. Das zweite Zahnrad 24 ist darüber hinaus als Spindelmutter mit einer Spindelachse 28 ausgebildet. Dazu weist das zweite Zahnrad 24 ein innenliegendes, um die Spindelachse 28 angeordnetes Spindelgewinde 30 auf. Die Spindelachse 28 ist mit der zweiten Drehachse 26 zusammenfallend ausgebildet. Das Getriebe 13 kann so mittels der mit dem Spindelgewinde 30 im Eingriff stehenden, auf der Spindelachse angeordneten Gewindespindel 12 angetrieben werden.

Wie insbesondere die Fig. 3 weiter zeigt, sind die Halteelemente 18 entlang der zweiten Drehachse 26 ausgerichtet. Die beiden Halteelemente 18 sind derart an dem Getriebegehäuse 16 angeordnet, dass die Gehäuseeinheit 14 eine T-Form mit einem vertikalen Abschnitt 32 und zwei horizontalen Abschnitten 34 aufweist (siehe insbesondere Fig. 4). Dabei ist der vertikale Abschnitt 32 durch das Getriebegehäuse 16 und die horizontalen Abschnitte 34 jeweils durch eines der Halteelemente 18 gebildet.

Wie ebenfalls aus Fig. 3 deutlich wird, weist das Getriebegehäuse 16 eine entlang einer Öffnungsachse 36 ausgebildete Öffnung 38 auf, in der das Getriebe 13 angeordnet ist. Die Öffnungsachse 36 ist senkrecht zu der ersten Drehachse 22 und der zweiten Drehachse 26 angeordnet. In der Darstellung der Fig. 4 ist erkennbar, dass die Öffnung 38 als Durchgangsöffnung ausgebildet ist. Eine derartige Ausbildung der Öffnung 38 kann insbesondere mit Blick auf die Fertigung der Gehäuseeinheit 14 aber auch hinsichtlich der Montage der Getriebeeinheit 10 vorteilhaft sein.

Fig. 3 zeigt außerdem, dass die Getriebeeinheit 10 einen Deckeleinsatz 40 mit einem die Öffnung 38 verschließenden Deckel 42 aufweist. Der Deckeleinsatz 40 weist zwei erste Lagerelemente 44 auf, mittels dessen das erste Zahnrad 20 gleitgelagert ist. Das erste Zahnrad 20 weist zwei auf der ersten Drehachse 22 einander gegenüberliegend angeordnete erste Lagerfortsätze 46 auf, wobei jeder ersten Lagerfortsätze 46 an einem der ersten Lagerelemente 44 angeordnet ist. Jedes der ersten Lagerelemente 44 ist als Teil eines geteilten Lagersitzes und damit als Teillagersitz ausgebildet. Dabei ist der Lagersitz in Umfangsrichtung um die erste Drehachse 22 geteilt.

Der Deckeleinsatz 40 weist zwei Stützstrukturen 48 auf, die jeweils einerseits an einem der ersten Lagerelemente 44 und andererseits an dem Deckel 42 angeordnet sind. So kann das beabstandet zu dem Deckel 42 angeordnete erste Zahnrad 20 mittels der ersten Lagerelement 44 gelagert werden. Das zweite Zahnrad 24 ist dabei zwischen dem Deckel 42 und dem ersten Zahnrad 20 angeordnet.

Das Getriebegehäuse 16 weist zudem zwei Lagernuten 50 zur Lagerung des ersten Zahnrads 20 auf. Dazu ist das erste Zahnrad 20 mit den beiden ersten Lagerfortsätzen 46 jeweils in einer der Lagernuten 50 angeordnet. Wie insbesondere Fig. 2 veranschaulicht, weist jede der Lagernuten 50 ein Nutende 52 auf, das als Teillagersitz ausgebildet ist. Jedes der Nutenden 52 bildet zusammen mit dem jeweiligen ersten Lagerelement 44 einen Lagersitz des ersten Zahnrads 20. Die Lagernuten 50 erstrecken sich jeweils von einem dem horizontalen Abschnitt 34 des Getriebegehäuses 16 gegenüberliegend angeordneten freien Ende 54 des vertikalen Abschnitts 32 in Richtung des horizontalen Abschnitts 34 (siehe auch Fig. 4). Die Stützstrukturen 48 sind derart in der jeweiligen Lagernut 50 angeordnet, dass die jeweilige Lagernut 50 durch die entsprechende Stützstruktur 48 verschlossen ist.

Wie Fig. 3 zeigt, weist der Deckeleinsatz 40 zwei zweite Lagerelemente 55 auf, mittels derer das zweite Zahnrad 24 gleitgelagert ist. Dazu weist das zweite Zahnrad 24 zwei auf der zweiten Drehachse 26 einander gegenüberliegend angeordnete zweite Lagerfortsätze 56 auf, wobei jeder zweiten Lagerfortsätze 56 an einem der zweiten Lagerelemente 55 angeordnet ist. Die zweiten Lagerelemente 55 sind jeweils als Teil eines in Umfangsrichtung um die zweite Drehachse 26 geteilten Lagersitzes und damit als Teillagersitz ausgebildet.

Der Deckeleinsatz 40 ist einstückig ausgebildet. Insbesondere sind die Stützstrukturen 48 mit den ersten Lagerelementen 44 sowie die zweiten Lagerelemente jeweils einstückig an dem Deckel 42 angeformt. So können die ersten Lagerelemente 44 und die zweiten Lagerelemente 55 zusammen mit dem Deckel 42 in einem Montageschritt in das Getriebegehäuse 16 montiert werden. Vorzugsweise ist der Deckeleinsatz 40 als Kunststoffspritzgussteil ausgebildet. Der Deckeleinsatz 40 ist in dem Getriebegehäuse 16 vorzugsweise formschlüssig befestigbar, beispielsweise mit einer Stift-, Niet- oder Schraubverbindung. Außerdem ist eine Befestigung des Deckeleinsatzes 40 in dem Getriebegehäuse 16 mittels einer Klebe- oder Schweißverbindung denkbar.

Die Getriebeeinheit 10 weist zwei dritte Lagerelemente 58 auf. Die dritten Lagerelemente sind ebenfalls in Fig. 3 gezeigt. Das zweite Zahnrad 24 ist mittels der beiden dritten Lagerelemente 58 gelagert ist. Das Getriebegehäuse 16 weist zwei Spindelöffnungen 60 zur Durchführung der Gewindespindel 12 auf. In jede der Spindelöffnungen 60 ist jeweils eines der dritten Lagerelemente 58 einsetzbar. Jedes der dritten Lagerelemente 58 weist eine Lagerelementöffnung 62 zur Durchführung der Gewindespindel 12 auf. Die dritten Lagerelemente 58 sind jeweils als Teil eines geteilten Lagersitzes ausgebildet, derart dass jeweils eines der dritten Lagerelemente 58 zusammen mit jeweils einem der zweiten Lagerelemente 55 einen Lagersitz des zweiten Zahnrads 24 bildet.

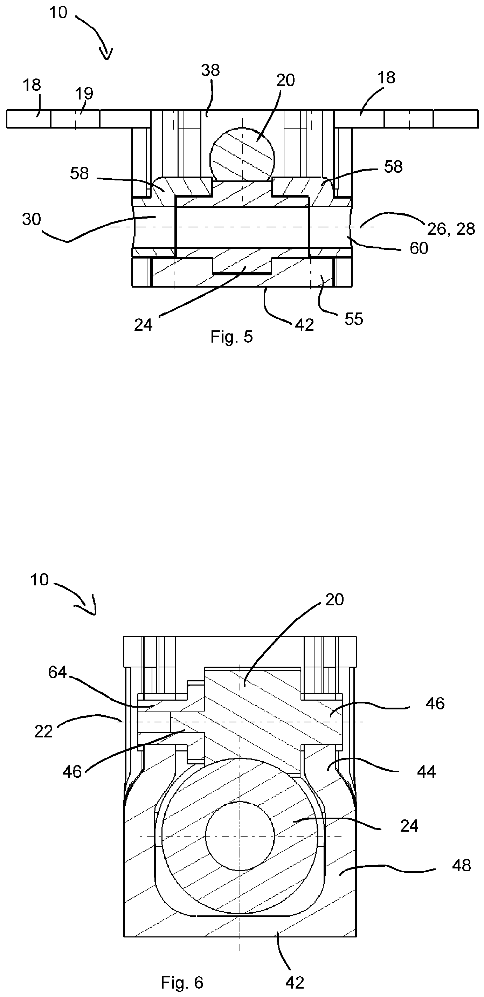

Die Schnittansicht der Fig. 6 zeigt, dass die Getriebeeinheit 10 eine Lagerbuchse 64 aufweist, wobei das erste Zahnrad 20 einseitig mittels der Lagerbuchse 64 gelagert ist. Dadurch kann die Lage des ersten Zahnrads 20 entlang der ersten Drehachse 22 definiert werden. Zudem ist aus Fig. 6 erkennbar, dass die ersten Lagerfortsätze 46 des ersten Zahnrads 20 unterschiedlich ausgebildet sind, indem sie insbesondere unterschiedliche Durchmesser aufweisen. Derartige Unterschiede können mittels der Lagerbuchse 64 ausgeglichen werden, um das erste Zahnrad 20 mit beiden ersten Lagerfortsätzen 46 in den identisch ausgebildeten Lagernuten 50 lagern zu können. Dazu ist die Lagerbuchse 64 auf einem der ersten Lagerfortsätze 46 angeordnet.

Die perspektivische Darstellung der Fig. 2 zeigt, dass das Getriebegehäuse 16 einen ersten Gehäuseabschnitt 66 aufweist, in dem das erste Zahnrad 20 angeordnet ist. Darüber hinaus weist das Getriebegehäuse 16 einen zweiten Gehäuseabschnitt 68 auf, in dem das zweite Zahnrad 24 angeordnet ist. Wie anhand der separaten Darstellung der Gehäuseeinheit 14 in Fig. 4 veranschaulicht ist, weist die Öffnung 38 in Richtung der ersten Drehachse 22 in dem ersten Gehäuseabschnitt 66 eine erste Öffnungsbreite 70 und in dem zweiten Gehäuseabschnitt 68 eine zweite Öffnungsbreite 72 auf. Dabei ist die erste Öffnungsbreite 70 kleiner ausgebildet als die zweite Öffnungsbreite 72. So kann das erste Zahnrad 20 bei der Montage durch Einführen der ersten Lagerfortsätze 46 bzw. der Lagerbuchse 64 in die jeweilige Lagernut 50 auf einfache Weise positioniert werden.

Die bevorzugte Montage der Getriebeeinheit 10 lässt sich insbesondere anhand der Explosionsdarstellung der Fig. 3 nachvollziehen. Dabei können die folgenden Schritte, vorzugsweise in der genannten Reihenfolge, durchgeführt werden:
- Bereitstellen der Gehäuseeinheit 14,
- einseitig Anordnen der Lagerbuchse 64 auf einem der ersten Lagerfortsätze 46 an dem ersten Zahnrad 20, Anordnen des ersten Zahnrads 20 in dem Getriebegehäuses 16,
- Einsetzen der dritten Lagerelemente 58 in die Spindelöffnungen 60,
- Anordnen des zweiten Zahnrads 24 in den zweiten Lagerelementen 55 des Deckeleinsatzes 40,
- Anordnen des Deckeleinsatzes 40 und des zweiten Zahnrads 24 in dem Getriebegehäuse 16 derart, dass das erste Zahnrad 20 mittels der ersten Lagerelemente 44 und das zweite Zahnrad 24 mittels der zweiten Lagerelemente 55 und mittels der dritten Lagerelemente 58 gelagert wird.

### Bezugszeichenliste

- 10: Getriebeeinheit
- 12: Gewindespindel
- 13: Getriebe
- 14: Gehäuseeinheit
- 16: Getriebegehäuse
- 18: Halteelement
- 19: Befestigungsbohrung
- 20: erstes Zahnrad
- 22: erste Drehachse
- 24: zweites Zahnrad
- 26: zweite Drehachse
- 28: Spindelachse
- 30: Spindelgewinde
- 32: vertikaler Abschnitt
- 34: horizontaler Abschnitt
- 36: Öffnungsachse
- 38: Öffnung
- 40: Deckeleinsatz
- 42: Deckel
- 44: erstes Lagerelement
- 46: erster Lagerfortsatz
- 48: Stützstruktur
- 50: Lagernut
- 52: Nutende
- 54: freien Ende
- 55: zweites Lagerelement
- 56: zweiter Lagerfortsatz
- 58: drittes Lagerelement
- 60: Spindelöffnung
- 62: Lagerelementöffnung
- 64: Lagerbuchse
- 66: erster Gehäuseabschnitt
- 68: zweiter Gehäuseabschnitt
- 70: erste Öffnungsbreite
- 72: zweite Öffnungsbreite

## Patentansprüche

1. Getriebeeinheit (10) zur Verstellung, insbesondere Längsverstellung, eines Sitzes, insbesondere eines Fahrzeugsitzes, mit einem Getriebe (13), umfassend ein erstes Zahnrad (20) mit einer ersten Drehachse (22) und ein mit dem ersten Zahnrad (20) kämmendes zweites Zahnrad (24) mit einer zweiten Drehachse (26), und mit einer Gehäuseeinheit (14), wobei die Gehäuseeinheit (14) umfasst
• ein Getriebegehäuse (16), in dem das Getriebe (13) angeordnet ist, und
• mindestens ein Halteelement (18) zum Herstellen einer mechanischen Wirkverbindung der Getriebeeinheit (10) mit dem Sitz,
**dadurch gekennzeichnet, dass**
das mindestens eine Halteelement (18) einstückig an das Getriebegehäuse (16) angeformt ist.

2. Getriebeeinheit (10) nach Anspruch 1,
**dadurch gekennzeichnet, dass** das mindestens eine Halteelement (18) entlang der ersten Drehachse (22) und/oder der zweiten Drehachse (26) ausgerichtet ist.

3. Getriebeeinheit (10) nach einem der vorhergehenden Ansprüche, **dadurch gekennzeichnet, dass** die Gehäuseeinheit (14) zwei Halteelemente (18) des mindestens einen Halteelements (18) aufweist, die an dem Getriebegehäuse (16) einander gegenüberliegend angeformt sind.

4. Getriebeeinheit (10) nach einem der vorhergehenden Ansprüche, **dadurch gekennzeichnet, dass** das Getriebegehäuse (16) eine entlang einer Öffnungsachse (36) ausgebildete Öffnung (38) aufweist, in der das Getriebe (13) angeordnet ist, wobei die Öffnungsachse (36) vorzugsweise senkrecht zu der ersten Drehachse (22) und/oder der zweiten Drehachse (26) angeordnet ist.

5. Getriebeeinheit (10) nach Anspruch 4,
**dadurch gekennzeichnet, dass** die Öffnung (38) als Durchgangsöffnung ausgebildet ist.

6. Getriebeeinheit (10) nach einem der Ansprüche 4 bis 5, **dadurch gekennzeichnet, dass** die Getriebeeinheit (10) einen Deckeleinsatz (40) mit einem die Öffnung (38) verschließenden Deckel (42) aufweist, wobei der Deckeleinsatz (40) mindestens ein erstes Lagerelement (44) aufweist, mittels dessen das erste Zahnrad (20) gelagert ist.

7. Getriebeeinheit (10) nach Anspruch 6,
**dadurch gekennzeichnet, dass** der Deckeleinsatz (40) mindestens eine Stützstruktur (48) aufweist, die einerseits an dem mindestens einen ersten Lagerelement (44) und andererseits an dem Deckel (42) angeordnet ist.

8. Getriebeeinheit (10) nach einem der vorhergehenden Ansprüche, **dadurch gekennzeichnet, dass** das Getriebegehäuse (16) mindestens eine Lagernut (50) aufweist, in der das erste Zahnrad (20) gelagert ist.

9. Getriebeeinheit (10) nach den Ansprüchen 7 und 8,
**dadurch gekennzeichnet, dass** die mindestens eine Stützstruktur (48) in der mindestens einen Lagernut (50) angeordnet ist.

10. Getriebeeinheit (10) nach einem der Ansprüche 6 bis 9, **dadurch gekennzeichnet, dass** der Deckeleinsatz (40) mindestens ein zweites Lagerelement (55) aufweist, wobei das zweite Zahnrad (24) mittels des mindestens einen zweiten Lagerelements (55) gelagert ist.

11. Getriebeeinheit (10) nach einem der Ansprüche 6 bis 9, **dadurch gekennzeichnet, dass** der Deckeleinsatz (40) einstückig ausgebildet ist.

12. Getriebeeinheit (10) nach einem der vorhergehenden Ansprüche, **dadurch gekennzeichnet, dass** die Getriebeeinheit (10) mindestens ein drittes Lagerelement (58) aufweist, wobei das zweite Zahnrad (24) mittels des mindestens einen dritten Lagerelements (58) gelagert ist, wobei das Getriebegehäuse (16) mindestens eine Spindelöffnung (60) zur Durchführung einer Gewindespindel (12) aufweist, und wobei das mindestens eine dritte Lagerelement (58) in die mindestens eine Spindelöffnung (60) einsetzbar ist.

13. Getriebeeinheit (10) nach einem der vorhergehenden Ansprüche, **dadurch gekennzeichnet, dass** die Getriebeeinheit (10) eine Lagerbuchse (64) aufweist, wobei das erste Zahnrad (20) einseitig mittels der Lagerbuchse (64) gelagert ist.

14. Getriebeeinheit (10) nach einem der Ansprüche 4 bis 13, **dadurch gekennzeichnet, dass** das Getriebegehäuse (16) einen ersten Gehäuseabschnitt (66) aufweist, in dem das erste Zahnrad (20) angeordnet ist, und einen zweiten Gehäuseabschnitt (68) aufweist, in dem das zweite Zahnrad (24) angeordnet ist, wobei die Öffnung (38) in Richtung der ersten Drehachse (22) in dem ersten Gehäuseabschnitt (66) eine erste Öffnungsbreite (70) und in dem zweiten Gehäuseabschnitt (68) eine zweite Öffnungsbreite (72) aufweist, und wobei die erste Öffnungsbreite (70) kleiner ausgebildet ist als die zweite Öffnungsbreite (72).

15. Verstellbare Sitzeinheit, insbesondere für ein Fahrzeug, mit einem Sitz und einer Getriebeeinheit (10) nach einem der vorhergehenden Ansprüche, wobei das mindestens eine Halteelement (18) der Getriebeeinheit (10) an einer Sitzschiene des Sitzes befestigt ist.
